# EUROPÄISCHE PATENTSCHRIFT

(11) **EP 3 464 774 B1**
(45) Veröffentlichungstag und Bekanntmachung des Hinweises auf die Patenterteilung: **24.06.2020**
(21) Anmeldenummer: 17720783.4
(22) Anmeldetag: 02.05.2017
(51) Int. Cl.: E06B 5/11, E06B 3/663, E06B 3/66, B32B 17/10

(54) **ISOLIERVERGLASUNG MIT ERHÖHTER DURCHBRUCHHEMMUNG**
INSULATING GLAZING WITH INCREASED BREAKTHROUGH INHIBITION
VITRAGE ISOLANT A HAUTE RESISTANCE CONTRE LA RUPTURE

(30) Priorität: 31.05.2016 EP 16172119
(43) Veröffentlichungstag der Anmeldung: 10.04.2019
(73) Patentinhaber: SAINT-GOBAIN GLASS FRANCE, 92400 Courbevoie (FR)
(72) Erfinder: HERMENS, Ulrich, 52078 Aachen (DE); KOCHS, Rolf, 52062 Aachen (DE); NEANDER, Marcus, 52249 Eschweiler (DE); SCHREIBER, Walter, 52074 Aachen (DE)
(74) Vertreter: Schönen, Iris
(86) Internationale Anmeldenummer: PCT/EP2017/060337
(87) Internationale Veröffentlichungsnummer: WO 2017/207192

(56) Entgegenhaltungen:
- EP-A2- 0 078 530
- BE-A- 665 426
- DE-A1-102009 057 156

## Beschreibung

Die Erfindung betrifft eines Isolierverglasung mit erhöhter Durchbruchhemmung, ein Verfahren zu deren Herstellung und deren Verwendung.

Die Wärmeleitfähigkeit von Glas ist etwa um den Faktor 2 bis 3 niedriger als die von Beton oder ähnlichen Baustoffen. Da Scheiben in den meisten Fällen jedoch deutlich dünner als vergleichbare Elemente aus Stein oder Beton ausgelegt sind, verlieren Gebäude dennoch häufig den größten Wärmeanteil über die Außenverglasung. Die notwendigen Mehrkosten für Heizung und Klimaanlagen machen einen nicht zu unterschätzenden Teil der Unterhaltungskosten eines Gebäudes aus. Zudem werden im Zuge strengerer Bauvorschriften niedrigere Kohlendioxid Emissionen gefordert. Ein wichtiger Lösungsansatz hierfür sind Dreifachisolierverglasungen, die vor allem im Zuge immer schneller steigender Rohstoffpreise und strengeren Umweltschutzauflagen nicht mehr aus dem Gebäudebau wegzudenken sind. Dreifachisolierverglasungen machen daher einen zunehmend größeren Teil der nach außen gerichteten Verglasungen aus.

Neben der Isolationswirkung von Verglasungen spielt je nach Anwendungsgebiet auch die Schutzwirkung von Verglasungen eine entscheidende Rolle. Norm DIN EN 356 reguliert die Prüfung von einbruchhemmenden Verglasungen. Sie beschreibt Verfahren für die Prüfung auf Durchwurfhemmung und Durchbruchhemmung. Die Prüfung auf Durchbruchhemmung erfolgt für die höheren Klassen basierend auf standardisierten Hammer- und Axtschlägen, wobei der Aufwand für die Öffnung der Verglasung ermittelt wird. Die Durchbruchhemmung wird durch die drei Prüfklassen P6B bis P8B beschrieben, wobei P6B mehr als 30 Hammer- und Axtschlägen, P7B mehr als 50 Hammer- und Axtschlägen und P8B mehr als 70 Hammer- und Axtschlägen entspricht.

Die Verwendung von polymeren Scheiben zur Verbesserung der Durchbruchhemmung sowie zum Erreichen der Schutzklassen P6B bis P8B ist hinlänglich bekannt. So offenbaren beispielsweise US 4243719 A, DE 3486336 T2 und DE 102008043718 A1 Kunststoff-Glas-Laminate aus Glas und Polycarbonat oder Polymethylmethacrylat. Die flächige Verbindung der Scheiben erfolgt dabei über Gießharze oder Laminierfolien. Nach dem Stand der Technik wird vorzugsweise eine Lamination der Scheibenanordnung im Autoklavprozess durchgeführt, wobei zwischen polymeren Scheiben und benachbarter Glasscheibe in der Regel eine thermoplastische Polyurethanfolie zur Lamination verwendet wird. Derartige Laminate bieten zwar eine sehr gute Stabilität und Durchbruchhemmung, allerdings ist der Produktionsprozess aufgrund der Vielzahl erforderlicher Schritte, wie Trocknen der polymeren Scheiben oder Autoklavprozess, teuer. Ferner sind die Rohstoffkosten für thermoplastische Polyurethanfolien hoch. Darüber hinaus ist die Isolationswirkung des Laminats im Vergleich zu einschlägigen Isolierverglasungen gering. Daher ist es wünschenswert kostengünstigere Verglasungen, die eine Durchbruchhemmung und gleichzeitig eine verminderte Wärmeleitfähigkeit aufweisen, bereitzustellen.

Eine Isolierverglasung mit durchbruchhemmender Wirkung ist aus US 2005126091 A1 bekannt. Hierbei handelt es sich um eine Dreifachisolierverglasung, deren äußere Scheiben von Glasscheiben gebildet werden, zwischen denen als dritte Scheibe eine polymere Scheibe eingesetzt ist. Die polymere Scheibe ist mit den äußeren Glasscheiben über jeweils einen Abstandshalter verklebt. Dieser Aufbau verfügt nur über eine geringe mechanische Stabilität, so dass die Verglasung im Randbereich auf einfache Art und Weise mit einem Werkzeug ausgehebelt werden kann und somit keine ausreichende Einbruchssicherheit bietet.

EP 2 733 295 A1 offenbart eine Isolierverglasung umfassend eine erste Glasscheibe, eine zweite Glasscheibe und eine zwischen diesen angebrachte polymere Scheibe. Die polymere Scheibe wird dabei in ein Aufnahmeelement eingesetzt und das Aufnahmeelement wird über jeweils einen Abstandshalter mit der ersten Glasscheibe und der zweiten Glasscheibe verklebt. Die relative Positionierung der beiden Abstandshalter und des Aufnahmeelements muss passgenau mit nur geringen Toleranzen erfolgen, wodurch der Montageprozess erschwert wird.

Eine Isolierverglasung gemäß dem Oberbegriff des Anspruchs 1 wird in DE 10 2009 057156 A1 offenbart.

Eine Aufgabe der vorliegenden Erfindung ist es, eine verbesserte Isolierverglasung mit erhöhter Durchbruchhemmung, ein Verfahren zur Montage dieser erfindungsgemäßen Isolierverglasung und deren Verwendung bereitzustellen.

Die Aufgabe der vorliegenden Erfindung wird erfindungsgemäß durch eine Isolierverglasung nach dem unabhängigen Anspruch 1 gelöst. Bevorzugte Ausführungen der Erfindung gehen aus den Unteransprüchen hervor.

Die Isolierverglasung umfasst mindestens eine erste Scheibe, eine zweite Scheibe und eine dritte Scheibe und einen umlaufenden, zwischen erster und zweiter Scheibe angeordneten, Abstandshalter. Der Abstandshalter für die erfindungsgemäße Isolierverglasung umfasst mindestens einen polymeren Grundkörper, der eine erste Scheibenkontaktfläche und eine parallel dazu verlaufende zweite Scheibenkontaktfläche, eine erste Verglasungsinnenraumfläche, eine zweite Verglasungsinnenraumfläche und eine Außenfläche aufweist. In den polymeren Grundkörper sind eine erste Hohlkammer und eine zweite Hohlkammer sowie eine Nut eingebracht. Die Nut verläuft dabei parallel zur ersten Scheibenkontaktfläche und zweiten Scheibenkontaktfläche und dient der Aufnahme der dritten Scheibe. Die erste Hohlkammer grenzt an die erste Verglasungsinnenraumfläche, während die zweite Hohlkammer an die zweite Verglasungsinnenraumfläche angrenzt, wobei die Verglasungsinnenraumflächen sich oberhalb der Hohlkammern befinden und die Außenfläche sich unterhalb der Hohlkammern befindet. Oberhalb ist in diesem Zusammenhang als dem inneren Scheibenzwischenraum der Isolierverglasung zugewandt und unterhalb als dem Scheibeninnenraum abgewandt definiert. Da die Nut zwischen der ersten Verglasungsinnenraumfläche und zweiten Verglasungsinnenraumfläche verläuft, begrenzt sie diese seitlich und trennt die erste Hohlkammer und die zweite Hohlkammer voneinander. Die Seitenflanken der Nut werden dabei von den Wänden der ersten Hohlkammer und der zweiten Hohlkammer gebildet. Die Nut bildet eine Vertiefung, die geeignet ist die mittlere Scheibe (dritte Scheibe) der Isolierverglasung aufzunehmen. Dadurch wird die Position der dritten Scheibe über zwei Seitenflanken der Nut sowie die Bodenfläche der Nut definiert. Die erste Scheibe ist über eine Dichtung mit der ersten Scheibenkontaktfläche verbunden, während die zweite Scheibe über eine Dichtung an der zweiten Scheibenkontaktfläche verbunden ist. Die dritte Scheibe umfasst mindestens eine thermoplastische polymere Scheibe in einer Dicke von mindestens 3 mm, wobei diese thermoplastische polymere Scheibe mindestens eine Verjüngung aufweist. Die Dicke der thermoplastischen polymeren Scheibe von mindestens 3 mm entspricht dabei der Dicke außerhalb der Verjüngung. Diese Verjüngung der polymeren Scheibe ist im Randbereich der dritten Scheibe in die thermoplastische polymere Scheibe eingebracht. Somit ist die Dicke der dritten Scheibe im Randbereich, in dem sich die Verjüngung befindet, geringer als im restlichen Bereich der Scheibe. Die dritte Scheibe ist in diesem Bereich der Verjüngung in die Nut des Abstandshalters eingesetzt.

Die erfindungsgemäße Isolierverglasung weist gleichzeitig sowohl eine geringe Wärmeleitfähigkeit als auch eine erhöhte Durchbruchhemmung auf. Je nach Dicke der mindestens einen thermoplastischen polymeren Scheibe wird eine Schutzklasse von P6B, P7B oder P8B erreicht. In diesem Sinne ist es besonders vorteilhaft, dass die Dicke der dritten Scheibe variabel gestaltet werden kann, wobei die Geometrie des Abstandshalters unverändert gelassen werden kann. Da die dritte Scheibe im Bereich der Verjüngung in die Nut des Abstandshalters eingesetzt wird, ist die Breite der Nut unabhängig von der Dicke der dritten Scheibe außerhalb der Verjüngung. Im Randbereich wird die dritte Scheibe in diesem Fall so weit verjüngt, dass sie in die Nut eingepasst werden kann. Dies ist besonders vorteilhaft zur Vereinfachung des Produktionsprozesses, da ein standardisierter Abstandshalter für alle Durchbruchklassen unabhängig von der Dicke der verwendeten Scheiben verwendbar ist. Darüber hinaus befindet sich die thermoplastische polymere Scheibe der dritten Scheibe vollständig innerhalb der Isolierverglasung, wobei sie von der ersten Scheibe, der zweiten Scheibe sowie dem Abstandshalter umgeben ist. Somit ist das Material der thermoplastischen polymeren Scheibe vor Feuchtigkeit geschützt.

Weitere Vorteile der erfindungsgemäßen Isolierverglasung im Vergleich zu den nach dem Stand der Technik bekannten Kunststoff-Glas-Laminaten mit erhöhter Durchbruchhemmung sind ein verbesserter Schallschutz sowie geringere Produktionskosten. Entsprechende Einsparungen ergeben sich beispielsweise daraus, dass kein energieintensiver Autoklav-Prozess zur Lamination der Scheiben nötig ist und keine Laminierfolie zwischen den Scheiben benötigt wird. Darüber hinaus wird eine thermische Beanspruchung der thermoplastischen polymeren Scheibe während des Produktionsprozesses vermieden, wodurch die polymere Scheibe vollständig spannungsfrei verbleibt. Im Gegensatz dazu stellt ein Laminationsprozess eine enorme thermische Belastung dar, aus der Spannungen im Kunststoff-Glas-Laminat resultieren. Ferner unterscheiden sich die Ausdehnungskoeffizienten von Glas und Polymeren signifikant. Aus diesem Grund ist bei laminierten Kunststoff-Glas-Verbunden eine längere Einwirkung erhöhter Temperaturen, zum Beispiel durch direkte Sonneneinstrahlung, zu vermeiden. Dieser Nachteil des Standes der Technik kann mittels der erfindungsgemäßen Isolierverglasung vermieden werden, sofern die thermoplastische polymere Scheibe als nicht laminierte Einzelscheibe in der Nut eingesetzt wird.

Der Abstandshalter der erfindungsgemäßen Isolierverglasung ist einstückig ausgeführt, wodurch an diesem einteiligen doppelten Abstandshalter ("Doppelspacer") die mindestens erste Scheibe, zweite Scheibe und dritte Scheibe auf einfache und präzise Art und Weise montiert werden können. Dabei sind die beiden äußeren Scheiben (erste Scheibe und zweite Scheibe) an den Scheibenkontaktflächen angebracht, während die mittlere Scheibe (dritte Scheibe) in die Nut eingesetzt ist. Da der polymere Grundkörper als Hohlprofil ausgeformt ist, sind die Seitenflanken der Hohlkammern flexibel genug um einerseits beim Einsetzen der Scheibe in die Nut nachzugeben und andererseits die Scheibe spannungsfrei zu fixieren. Dies stellt bei Verwendung von thermoplastischen polymeren Scheiben als dritte Scheibe einen besonderen Vorteil dar, da auf diese Weise die Ausdehnung des thermoplastischen polymeren Materials der Scheibe bei Wärmeeinwirkung ungehindert möglich ist.

Im Gegensatz zu einer nach dem Stand der Technik bekannten Isolierverglasung mit zwei Abstandshaltern, wobei ein Abstandshalter zwischen erster und dritter Scheibe und ein Abstandshalter zwischen dritter und zweiter Scheibe angebracht ist, weist die erfindungsgemäße Isolierverglasung auch eine höhere mechanische Stabilität im Randbereich auf. Ein durchgehender einstückiger Abstandshalter bietet dabei eine erhöhte Sicherheit gegen Einbruch, da ein Aushebeln der Verglasung im Randbereich erschwert ist.

Die Hohlkammern des Abstandshalters der erfindungsgemäßen Isolierverglasung tragen nicht nur zur Flexibilität der Seitenflanken bei, sondern führen des Weiteren zu einer Gewichtsreduktion im Vergleich zu einem massiv ausgeformten Abstandshalter und stehen zur Aufnahme von weiteren Komponenten, wie beispielsweise eines Trockenmittels, zur Verfügung.

Die erste Scheibenkontaktfläche und die zweite Scheibenkontaktfläche stellen die Seiten des Abstandshalters dar, an denen beim Einbau des Abstandshalters die Montage der äußeren Scheiben (erste Scheibe und zweite Scheibe) einer Isolierverglasung erfolgt. Die erste Scheibenkontaktfläche und die zweite Scheibenkontaktfläche verlaufen parallel zueinander.

Die Verglasungsinnenraumflächen sind als die Flächen des polymeren Grundkörpers definiert, die nach Einbau des Abstandshalters in einer Isolierverglasung in Richtung des Innenraums der Verglasung weisen. Die erste Verglasungsinnenraumfläche liegt dabei zwischen der ersten und der dritten Scheibe, während die zweite Verglasungsinnenraumfläche zwischen der dritten und der zweiten Scheibe angeordnet ist.

Die Außenfläche des polymeren Grundkörpers ist die den Verglasungsinnenraumflächen gegenüberliegende Seite, die vom Innenraum der Isolierverglasung weg in Richtung einer äußeren Versiegelung weist.

Die Außenfläche des Abstandshalters kann in einer möglichen Ausführungsform jeweils benachbart zu den Scheibenkontaktflächen abgewinkelt sein, wodurch eine erhöhte Stabilität des polymeren Grundkörpers erzielt wird. Die Außenfläche kann benachbart zu den Scheibenkontaktflächen beispielsweise um jeweils 30-60°, relativ zur Außenfläche in Nachbarschaft der Nut, abgewinkelt sein.

In einer bevorzugten Ausführungsform der Erfindung besteht die dritte Scheibe aus einer einzelnen thermoplastischen polymeren Scheibe. Dies ist vorteilhaft, da in diesem Fall keine Lamination der thermoplastischen polymeren Scheibe erfolgt. Die nach dem Stand der Technik üblicherweise zur Lamination von polymeren Scheiben verwendeten Laminierfolien aus thermoplastischem Polyurethan sind vergleichsweise teuer im Materialpreis, so dass mittels der erfindungsgemäßen Anordnung eine entsprechende Einsparung erzielt werden kann. Ferner wird der Produktionsprozess deutlich vereinfach, da auf ein Laminierverfahren im Autoklaven verzichtet werden kann.

In einer weiteren bevorzugten Ausführungsform besteht die dritte Scheibe aus mehreren Scheiben, wobei sie mindestens eine thermoplastische polymere Scheibe umfasst. In einer derartigen Ausführungsform sind die Einzelscheiben über Laminierfolien zur dritten Scheibe verbunden. Eine solche Ausgestaltung kann vorteilhaft sein um eine höhere Durchbruchklasse der Verglasung zu erreichen, da die zwischen den Einzelscheiben befindlichen Laminierfolien die Durchbruchhemmung weiter verbessern. In diesem Fall wird zwar ein Laminierprozess benötigt um den Scheibenverbund der dritten Scheibe herzustellen, jedoch können auch in diesem Fall die Laminierfolien zwischen erster Scheibe und dritter Scheibe sowie zwischen dritter Scheibe und zweiter Scheibe durch die erfindungsgemäße Verwendung des Abstandshalters eingespart werden.

Besonders bevorzugt umfassen alle Einzelscheiben der dritten Scheibe ein thermoplastisches polymeres Material. Somit zeigt die dritte Scheibe auch als Verbundscheibe aus mehreren polymeren Scheiben eine homogene thermische Ausdehnung, wodurch Spannungen vermieden werden.

In einer alternativen Ausführungsform der Erfindung umfasst die dritte Scheibe mindestens eine polymere thermoplastische Scheibe und mindestens eine Glasscheibe, die ebenfalls über Laminierfolien miteinander verbunden sind. Dies ist beispielsweise vorteilhaft sofern eine Low-E-Beschichtung auf der dritten Scheibe gewünscht ist. Die Low-E-Beschichtung wird in diesem Fall auf der Glasscheibe der dritten Scheibe aufgebracht und verbessert das Wärmedämmvermögen der Isolierverglasung noch weiter.

In einer bevorzugten Ausführungsform der Erfindung ist die Verjüngung der thermoplastischen polymeren Scheibe in Form eines Rückschnitts in das polymere Material eingebracht. Dabei ist im Bereich des Rückschnitts das polymere Material der thermoplastischen polymeren Scheibe abgetragen. Dies ist besonders vorteilhaft, da auf diese Weise das Maß des Rückschnitts und somit die Tiefe der Verjüngung variabel angepasst werden kann, abhängig davon welche Breite die Nut des Abstandshalters hat in den die dritte Scheibe eingesetzt wird.

Sofern die dritte Scheibe aus einem Verbund mehrerer Scheiben besteht, ist die Verjüngung mindestens in der mindestens einen thermoplastischen polymeren Scheibe eingebracht. Falls die dritte Scheibe weitere polymere Scheiben umfasst, können diese optional ebenfalls über eine Verjüngung verfügen. Umfasst die dritte Scheibe eine oder mehrere Glasscheiben, so ist die Verjüngung lediglich in die mindestens eine thermoplastische polymere Scheibe eingebracht. Dies stellt einen Vorteil bezüglich des Produktionsprozesses dar, da ein Rückschnitt des polymeren Materials wesentlich einfacher durchzuführen ist als ein entsprechender Rückschnitt des Glasmaterials.

Der Rückschnitt besteht vorzugsweise aus einer Ausfräsung, wodurch die Verjüngung erzeugt wird. Mittels Fräsen ist der Abtrag des polymeren Materials auf einfache und zeitsparende Weise in der Produktion handhabbar. Dem Fachmann sind auch weitere alternative Methoden zur Erzeugung der erfindungsgemäßen Verjüngung bekannt, wie beispielsweise Hobeln.

In einer möglichen Ausführungsform der Erfindung besteht die dritte Scheibe aus mindestens zwei thermoplastischen polymeren Scheiben, die über eine Laminierfolie miteinander verbunden sind. Dabei kann eine Verjüngung entweder durch einen Rückschnitt in einer oder in beiden polymeren Scheiben erzielt werden. Alternativ dazu kann eine der mindestens zwei polymeren Scheiben eine kürzere Kantenlänge aufweisen als die andere der polymeren Scheiben. In diesem Fall werden die polymeren Scheiben so zu einem Verbund laminiert, dass die Verjüngung in der dritten Scheibe im Bereich der polymeren Scheibe mit kürzerer Kantenlänge entsteht. Dabei wird nur die polymere Scheibe mit der größeren Kantenlänge in die Nut des Abstandshalters eingesetzt, während die Verjüngung sich im Bereich der polymeren Scheibe mit der kürzeren Kantenlänge befindet. Durch diesen passgenauen Zuschnitt der Scheiben kann der Schritt des Fräsens, oder einer anderweitigen mechanischen Abtragung, eingespart werden.

Die Verjüngung der dritten Scheibe ragt bevorzugt über die benachbarte Verglasungsinnenraumfläche, so dass sich der Bereich der Aussparung der dritten Scheibe oberhalb der entsprechenden Verglasungsinnenraumfläche befindet.

Die Verjüngung der dritten Scheibe kann sowohl in Richtung der Angriffsseite als auch in Richtung der Schutzseite der Verglasung ausrichtet sein, sowie zu beiden Seiten ausgerichtet sein im Fall von zwei beidseitigen Verjüngungen in der dritten Scheibe.

Bevorzugt ist eine einseitige Verjüngung in die dritte Scheibe eingebracht. Versuche zeigen, dass bei einer einseitigen Verjüngung ein höherer Kraftaufwand zur Biegung der Scheibe benötigt wird. In Versuchen wurden Polycarbonat-Scheiben gleicher Dicke und gleichen Aufbaus, die sich lediglich durch die Anordnung der Verjüngung unterscheiden, im Bereich der Verjüngung eingespannt und einem Biegeversuch unterzogen. In einer ersten Versuchsreihe wurde eine beidseitige Verjüngung angeordnet, in einer zweiten Versuchsreihe eine einseitige Verjüngung doppelter Tiefe. Die verbleibende Scheibendicke im Bereich der Verjüngung war somit in beiden Versuchsreihen identisch. Unabhängig davon ob die Krafteinwirkung auf der Scheibenseite mit der Verjüngung oder auf der gegenüberliegenden Scheibenseite erfolgt, konnte festgestellt werden, dass die zur Biegung der Scheibe mit einseitiger Verjüngung aufzuwendende Kraft bei gleicher Amplitude um ca. 30 % höher ist als die bei Scheiben mit zweiseitiger Verjüngung benötigte Kraft. Somit ist eine einseitige Verjüngung vorteilhaft hinsichtlich eines verbesserten Einbruchs- und Durchbruchsschutzes. Bevorzugt ist die Verjüngung auf der Angriffsseite angeordnet.

Die Angriffsseite der Verglasung ist dabei als die äußere Scheibenseite definiert, von der ausgehend mit einem Angriff auf die Verglasung zu rechnen ist. Im Falle einer Verglasung zum Einbruchsschutz ist dies die zur Gebäudeaußenseite gerichtete Scheibenseite. Die Schutzseite bezeichnet die entgegengesetzte Verglasungsseite, auf der sich der schützenswerte Gegenstand bzw. die zu schützenden Personen befinden. Bei der genannten Anwendung der Verglasung zum Einbruchsschutz wäre dies die zum Gebäudeinneren gerichtete Verglasungsseite.

In einer bevorzugten Ausführungsform der erfindungsgemäßen Isolierverglasung kontaktiert die umlaufende Kante maximaler Abmessung der dritten Scheibe die Bodenfläche der Nut nicht unmittelbar. Als umlaufende Kante maximaler Abmessung wird die umlaufende Kante außerhalb der Verjüngung bezeichnet. Zwischen der Bodenfläche der Nut und der umlaufenden Kante befindet sich demnach ein Spalt, der eine Längenausdehnung der polymeren Scheibe ermöglicht und demnach das Auftreten von Spannungen bei thermischer Ausdehnung verhindert.

In ihrer Breite entspricht die Nut mindestens der Dicke der dritten Scheibe in deren Randbereich mit Verjüngung, mit dem die dritte Scheibe in die Nut eingesetzt wird.

Die Nut enthält optional eine Einlage, die ein Verrutschen der Scheibe und eine dadurch bedingte Geräuschentwicklung beim Öffnen und Schließen des Fensters verhindert. In diesem Fall kann die Nut breiter als die darin montierte Scheibe im Bereich der Verjüngung sein, so dass die erwähnte Einlage zusätzlich in die Nut eingesetzt werden kann. Die Einlage trägt dabei zur Kompensation der thermischen Ausdehnung der dritten Scheibe bei Erwärmung bei, so dass unabhängig von den klimatischen Bedingungen eine spannungsfreie Fixierung gewährleistet ist. Alternativ kann die Einlage auch nur in Teilbereichen der Nut, beispielsweise den der Bodenfläche benachbarten Bereichen der Seitenflanken, angebracht sein. In diesem Fall sind nur eventuelle Leerräume innerhalb der Nut durch die Einlage gefüllt. An der oberen Öffnung der Nut entspricht deren Breite dabei der Breite der eingesetzen Scheibe im Bereich der Verjüngung.

In einer bevorzugten Ausführungsform ist die Einlage so in der Nut angebracht, dass der erste innere Scheibenzwischenraum, der zwischen erster Scheibe und dritter Scheibe liegt, mit dem zweiten inneren Scheibenzwischenraum, der zwischen dritter Scheibe und zweiter Scheibe liegt, so verbunden ist, dass ein Luft- bzw. Gasaustausch möglich ist. Dadurch wird ein Druckausgleich zwischen den inneren Scheibenzwischenräumen ermöglicht, was im Vergleich zu einer Ausführung mit hermetisch abgeschlossenen inneren Scheibenzwischenräumen zu einer deutlichen Reduktion der Belastung der dritten Scheibe führt. Um diesen Druckausgleich zu ermöglichen, ist die Einlage bevorzugt mit Unterbrechungen in der Nut des polymeren Grundkörpers angebracht. Das heißt, die Einlage ist nicht durchgehend entlang des gesamten Abstandshalterprofils angebracht, sondern nur in einzelnen Bereichen, in denen die Scheibe fixiert wird, um ein Klappern der Scheibe in der Nut zu verhindern. In den Bereichen ohne Einlage kann ein Druckausgleich stattfinden. Alternativ besteht die Einlage aus einem gasdurchlässig ausgeführten Material, zum Beispiel einem porösen Schaum, wodurch ebenfalls ein Druckausgleich zwischen angrenzenden inneren Scheibenzwischenräumen möglich ist.

Die Einlage enthält bevorzugt ein Elastomer, besonders bevorzugt einen Butylkautschuk.

Die Einlage kann entweder nach Fertigung des Grundkörpers abschnittsweise oder vollständig in diesen eingebracht werden oder bereits mit dem polymeren Grundkörper co-extrudiert werden. In einer bevorzugten Ausführungsform wird die Einlage nach Herstellung des Grundkörpers in die Nut des Grundkörpers extrudiert.

Die Seitenflanken der Nut können sowohl parallel zu den Scheibenkontaktflächen verlaufen als auch in die eine oder andere Richtung geneigt sein. Durch eine Neigung der Seitenflanken in Richtung der dritten Scheibe wird eine Verjüngung erzeugt, die dazu dienen kann die dritte Scheibe gezielt zu fixieren. Des Weiteren sind auch gewölbte Seitenflanken denkbar, wobei nur der mittlere Abschnitt der Seitenflanken an der dritten Scheibe anliegt.

Der polymere Grundkörper weist bevorzugt entlang der Verglasungsinnenraumflächen eine Gesamtbreite von 10 mm bis 50 mm, besonders bevorzugt von 20 mm bis 36 mm, auf. Durch die Wahl der Breite der Verglasungsinnenraumflächen wird der Abstand zwischen erster und dritter Scheibe bzw. zwischen dritter und zweiter Scheibe bestimmt. Bevorzugt sind die Breiten der ersten Verglasungsinnenraumfläche und der zweiten Verglasungsinnenraumfläche gleich. Alternativ sind auch asymmetrische Abstandshalter möglich, bei denen die beiden Verglasungsinnenraumflächen unterschiedliche Breiten haben. Das genaue Abmaß der Verglasungsinnenraumflächen richtet sich nach den Dimensionen der Isolierverglasung und den gewünschten Scheibenzwischenraumgrößen.

Der polymere Grundkörper weist bevorzugt entlang der Scheibenkontaktflächen eine Höhe von 5 mm bis 15 mm, besonders bevorzugt von 5 mm bis 10 mm, auf.

Die Nut weist bevorzugt eine Tiefe von 1 mm bis 15 mm, besonders bevorzugt von 3mm bis 8mm auf. Dadurch kann eine stabile Fixierung der dritten Scheibe erreicht werden. Die Breite der Nut beträgt bevorzugt 2 mm bis 30 mm, besonders bevorzugt 3 mm bis 16 mm.

Die Wandstärke d des polymeren Grundkörpers beträgt 0,5 mm bis 15 mm, bevorzugt 0,5 mm bis 10 mm, besonders bevorzugt 0,7 mm bis 1 mm.

Der polymere Grundkörper enthält bevorzugt ein Trockenmittel, bevorzugt Kieselgele, Molekularsiebe, CaCl₂, Na₂SO₄, Aktivkohle, Silikate, Bentonite, Zeolithe und/oder Gemische davon. Dies ist besonders bei der Verwendung von polymeren Scheiben vorteilhaft, da eine Vielzahl polymerer Materialien auf ihrer Oberfläche eine hohe Restfeuchte aufweist. Um diese polymeren Materialien in einer Verbundscheibe laminieren zu können, ist zunächst eine Trocknung der polymeren Scheiben empfehlenswert. In der erfindungsgemäßen Isolierverglasung ist dieser Trocknungsschritt nicht erforderlich, da das im Grundkörper befindliche Trockenmittel die erwähnte Restfeuchte aufnimmt. Das Trockenmittel ist bevorzugt in den Grundkörper eingearbeitet. Besonders bevorzugt befindet sich das Trockenmittel in der ersten und zweiten Hohlkammer des Grundkörpers.

In einer bevorzugten Ausführungsform weisen die erste Verglasungsinnenraumfläche und/oder die zweite Verglasungsinnenraumfläche mindestens eine Öffnung auf. Bevorzugt sind mehrere Öffnungen an beiden Verglasungsinnenraumflächen angebracht. Die Gesamtzahl der Öffnungen hängt dabei von der Größe der Isolierverglasung ab. Die Öffnungen verbinden die Hohlkammern mit den Scheibenzwischenräumen, wodurch ein Gasaustausch zwischen diesen möglich wird. Dadurch wird eine Aufnahme von Luftfeuchtigkeit durch ein in den Hohlkammern befindliches Trockenmittel erlaubt und somit ein Beschlagen der Scheiben verhindert. Die Öffnungen sind bevorzugt als Schlitze ausgeführt, besonders bevorzugt als Schlitze mit einer Breite von 0,2 mm und einer Länge von 2 mm. Die Schlitze gewährleisten einen optimalen Luftaustausch ohne dass Trockenmittel aus den Hohlkammern in die Scheibenzwischenräume eindringen kann.

Die erste Scheibe und die zweite Scheibe verfügen über eine Dicke von 2 mm bis 50 mm, bevorzugt 2 mm bis 10 mm, besonders bevorzugt 4 mm bis 6 mm, wobei beide Scheiben auch unterschiedliche Dicken haben können.

Die erste und/oder die zweite Scheibe können auch als Einscheibensicherheitsglas oder als teilvorgespanntes Glas ausgeführt werden. Einscheibensicheheitsglas verhindert durch sein typisches Bruchmuster die Entstehung spitzer Scherben. Teilvorgespanntes Glas weist hingegen eine höhere Resttragfähigkeit nach Beschädigung der Scheibe auf.

In einer möglichen Ausführungsform hat die dritte Scheibe eine Dicke von 3 mm bis 30 mm, bevorzugt von 3 mm bis 20 mm und besonders bevorzugt von 4 mm bis 12 mm, beispielsweise 4 mm, 6 mm, 8 mm, 10 mm oder 12 mm. Im Randbereich der dritten Scheibe ist eine Verjüngung in die mindestens eine polymere Scheibe der dritten Scheibe eingebracht. Die Dicke der polymeren Scheibe im Bereich der Verjüngung beträgt bevorzugt 1 mm bis 10 mm, besonders bevorzugt 2 mm bis 5 mm, beispielsweise 3 mm.

In einer möglichen Ausführungsform beträgt die Dicke der ersten Scheibe 3 mm, die Dicke der zweiten Scheibe 4 mm und die Dicke der dritten Scheibe 5 mm. Eine solche asymmetrische Kombination der Scheibendicken führt zu einer erheblichen Verbesserung der akustischen Dämpfung.

Es können auch mehrere Scheiben als Verbundglasscheibe ausgebildet sein. Bezüglich der dritten Scheibe wurde dies bereits beschrieben. Darüber hinaus können auch die erste Scheibe und die zweite Scheibe als Verbundscheiben ausgeführt sein. Vorteilhafterweise handelt es sich dabei um Glas-Glas-Verbunde aus mindestens zwei Glasscheiben, die über eine Laminierfolie miteinander verklebt sind. Dies verbessert die Durchbruchhemmung der erfindungsgemäßen Isolierverglasung weiter. Da es sich in diesem Fall nur um einen Verbund zweier Glasscheiben handelt, können auch kostengünstige Laminierfolien, beispielsweise aus Polyvinylbutyral, verwendet werden. Eine derartige erfindungsgemäße Verglasung hat weiterhin den Vorteil, dass die polymere Scheibe der dritten Scheibe durch den Abstandshalter fixiert wird und nicht laminiert werden muss.

Die Laminierfolien enthalten zumindest ein thermoplastisches Polymer, bevorzugt Ethylenvinylacetat (EVA), Polyvinylbutyral (PVB) oder Polyurethan (PU) oder Gemische oder Copolymere oder Derivate davon. Die Dicke der Laminierfolien beträgt bevorzugt von 0,2 mm bis 2 mm, besonders bevorzugt von 0,3 mm bis 1,5 mm. Besonders bevorzugt wird zur Lamination zweier Glasscheiben Polyvinylbutyral in einer Dicke von beispielsweise 0,38 mm oder 0,76 mm eingesetzt. Bei Lamination einer thermoplastischen polymeren Scheibe mit einer gleichgearteten Scheibe oder einer Glasscheibe verwendet der Fachmann bevorzugt Polyurethan mit einer Dicke von beispielsweise 1,25 mm.

In einer möglichen Ausführungsform ist die zweite Scheibe der Isolierverglasung in Richtung der Schutzseite, also der Seite der Scheibe auf der sich die zu schützenden Personen oder Gegenstände befinden, orientiert und als Verbundscheibe umfassend mindestens eine Glasscheibe und mindestens eine thermoplastische polymere Scheibe ausgeführt. Die thermoplastische polymere Scheibe ist dabei zur Schutzseite ausgerichtet und verhindert, dass im Zerstörungsfall Splitter in den Schutzbereich abgegeben werden.

Der äußere Scheibenzwischenraum, begrenzt durch erste Scheibe, zweite Scheibe und Außenfläche des Abstandshalters, ist zumindest teilweise, bevorzugt vollständig, mit einer äußeren Versiegelung verfüllt. Dadurch wird eine sehr gute mechanische Stabilisierung des Randverbunds erzielt.

Bevorzugt enthält die äußere Versiegelung Polymere oder silanmodifizierte Polymere, besonders bevorzugt organische Polysulfide, Silikone, raumtemperaturvernetzenden (RTV) Silikonkautschuk, peroxidischvernetzten Silikonkautschuk und/oder additionsvernetzten Silikonkautschuk, Polyurethane und/oder Butylkautschuk.

Die Dichtung zwischen der ersten Scheibenkontaktfläche und der ersten Scheibe, beziehungsweise zwischen der zweiten Scheibenkontaktfläche und der zweiten Scheibe, enthält bevorzugt ein Polyisobutylen. Das Polyisobutylen kann ein vernetzendes oder nicht vernetzendes Polyisobutylen sein.

Die erste Scheibe und/oder die zweite Scheibe der Isolierverglasung enthalten bevorzugt Glas, besonders bevorzugt Quarzglas, Borosilikatglas, Kalk-Natron-Glas und/oder Gemische davon.

Die dritte Scheibe umfasst mindestens eine thermoplastische polymere Scheibe. Sofern die dritte Scheibe darüber hinaus auch noch eine Glasscheibe enthält, so kann diese die für die erste und die zweite Scheibe genannten Zusammensetzungen aufweisen.

Die mindestens eine thermoplastische polymere Scheibe der dritten Scheibe umfasst bevorzugt Polycarbonat, Polymethylmethacrylat und/oder Copolymere und/oder Gemische davon. Diese Zusammensetzungen sind besonders geeignet um die Durchbruchhemmung der Isolierverglasung zu erhöhen. Insbesondere Polycarbonat weist eine hohe Durchbruchhemmung auf.

Die erste Scheibe, zweite Scheibe oder dritte Scheibe der Isolierverglasung weisen optional eine Low-E-Beschichtung auf. Die Low-E-Beschichtung wird dabei vorzugsweise auf einer Glasscheibe angebracht. Mit Low-E-Beschichtungen kann das Wärmedämmvermögen der Isolierverglasung noch weiter gesteigert und verbessert werden. Diese Beschichtungen sind Wärmestrahlung reflektierende Beschichtungen, die einen erheblichen Teil der Infrarot-strahlung reflektieren, was im Sommer zu einer verringerten Erwärmung des Wohnraums führt. Die verschiedensten Low-E-Beschichtungen sind beispielsweise bekannt aus DE 10 2009 006 062 A1, WO 2007/101964 A1, EP 0 912 455 B1, DE 199 27 683 C1, EP 1 218 307 B1 und EP 1 917 222 B1.

In einer bevorzugten Ausführungsform ist mindestens auf der Außenfläche des Abstandshalters, bevorzugt auf der Außenfläche und auf einen Teil der Scheibenkontaktflächen, eine gas- und dampfdichte Barriere aufgebracht. Die gas- und dampfdichte Barriere verbessert die Dichtigkeit des Abstandshalters gegen Gasverlust und Eindringen von Feuchtigkeit. Bevorzugt ist die Barriere auf etwa der Hälfte bis zwei Drittel der Scheibenkontaktflächen aufgebracht.

In einer bevorzugten Ausführungsform ist die gas- und dampfdichte Barriere als Folie ausgeführt. Diese Barrierefolie enthält mindestens eine polymere Schicht sowie eine metallische Schicht oder eine keramische Schicht. Dabei beträgt die Schichtdicke der polymeren Schicht zwischen 5 µm und 80 µm, während metallische Schichten und/oder keramische Schichten mit einer Dicke von 10 nm bis 200 nm eingesetzt werden. Innerhalb der genannten Schichtdicken wird eine besonders gute Dichtigkeit der Barrierefolie erreicht. Die Barrierefolie kann auf dem polymeren Grundkörper aufgebracht werden, beispielsweise geklebt werden. Alternativ kann die Folie mit dem Grundkörper zusammen co-extrudiert werden.

Besonders bevorzugt enthält die Barrierefolie mindestens zwei metallische Schichten und/oder keramische Schichten, die alternierend mit mindestens einer polymeren Schicht angeordnet sind. Die Schichtdicken der einzelnen Schichten sind bevorzugt wie im vorhergehenden Absatz beschrieben. Bevorzugt werden die außen liegenden Schichten dabei von der polymeren Schicht gebildet. In dieser Anordnung sind die metallischen Schichten besonders gut vor Beschädigung geschützt. Die alternierenden Schichten der Barrierefolie können auf die verschiedensten nach dem Stand der Technik bekannten Methoden verbunden bzw. aufeinander aufgetragen werden. Methoden zur Abscheidung metallischer oder keramischer Schichten sind dem Fachmann hinlänglich bekannt. Die Verwendung einer Barrierefolie mit alternierender Schichtenabfolge ist besonders vorteilhaft im Hinblick auf die Dichtigkeit des Systems. Ein Fehler in einer der Schichten führt dabei nicht zu einem Funktionsverlust der Barrierefolie. Im Vergleich dazu kann bei einer Einzelschicht bereits ein kleiner Defekt zu einem vollständigen Versagen führen. Des Weiteren ist die Auftragung mehrerer dünner Schichten im Vergleich zu einer dicken Schicht vorteilhaft, da mit steigender Schichtdicke die Gefahr interner Haftungsprobleme ansteigt. Ferner verfügen dickere Schichten über eine höhere Leitfähigkeit, so dass eine derartige Folie thermodynamisch weniger geeignet ist.

Die polymere Schicht der Folie umfasst bevorzugt Polyethylenterephthalat, Ethylenvinylalkohol, Polyvinylidenchlorid, Polyamide, Polyethylen, Polypropylen, Silikone, Acrylonitrile, Polyacrylate, Polymethylacrylate und/oder Copolymere oder Gemische davon. Die metallische Schicht enthält bevorzugt Eisen, Aluminium, Silber, Kupfer, Gold, Chrom und/oder Legierungen oder Oxide davon. Die keramische Schicht der Folie enthält bevorzugt Siliziumoxide und/oder Siliziumnitride.

In einer alternativen bevorzugten Ausführungsform ist die gas- und dampfdichte Barriere bevorzugt als Beschichtung ausgeführt. Die Beschichtung enthält Aluminium, Aluminiumoxide und / oder Siliciumoxide und wird bevorzugt über ein PVD-Verfahren (physikalische Gasphasenabscheidung) aufgebracht. Dadurch kann das Herstellungsverfahren erheblich vereinfacht werden, da der polymere Grundkörper direkt nach der Herstellung, zum Beispiel durch Extrusion, mit der Barrierebeschichtung versehen wird und kein gesonderter Schritt zum Aufbringen einer Folie nötig ist. Die Beschichtung mit den genannten Materialien liefert besonders gute Ergebnisse im Hinblick auf Dichtigkeit und zeigt zusätzlich exzellente Haftungseigenschaften zu den in Isolierverglasungen verwendeten Materialien der äußeren Versiegelung.

In einer besonders bevorzugten Ausführungsform weist die gas- und dampfdichte Barriere mindestens eine metallische Schicht oder keramische Schicht auf, die als Beschichtung ausgeführt ist und Aluminium, Aluminiumoxide und / oder Siliciumoxide enthält und bevorzugt über ein PVD-Verfahren (physikalische Gasphasenabscheidung) aufgebracht ist.

Der polymere Grundkörper enthält bevorzugt Polyethylen (PE), Polycarbonate (PC), Polypropylen (PP), Polystyrol, Polybutadien, Polynitrile, Polyester, Polyurethane, Polymethylmetacrylate, Polyacrylate, Polyamide, Polyethylenterephthalat (PET), Polybutylenterephthalat (PBT), bevorzugt Acrylnitril-Butadien-Styrol (ABS), Acrylester-Styrol-Acrylnitril (ASA), Acrylnitril-Butadien-Styrol/Polycarbonat (ABS/PC), Styrol-Acrylnitril (SAN), PET/PC, PBT/PC und/oder Copolymere oder Gemische davon. Mit diesen Materialien werden besonders gute Ergebnisse erzielt.

Bevorzugt ist der polymere Grundkörper glasfaserverstärkt. Durch die Wahl des Glasfaseranteils im Grundkörper kann der Wärmeausdehnungskoeffizient des Grundkörpers variiert und angepasst werden. Durch Anpassung des Wärmeausdehnungskoeffizienten des polymeren Grundkörpers und der Barrierefolie oder -beschichtung lassen sich temperaturbedingte Spannungen zwischen den unterschiedlichen Materialien und ein Abplatzen der Barrierefolie oder -beschichtung vermeiden. Der Grundkörper weist bevorzugt einen Glasfaseranteil von 20 % bis 50 %, besonders bevorzugt von 30 % bis 40 % auf. Der Glasfaseranteil im polymeren Grundkörper verbessert gleichzeitig die Festigkeit und Stabilität.

In einer weiteren bevorzugten Ausführungsform ist der polymere Grundkörper gefüllt durch Glashohlkugeln oder Glasblasen. Diese Glashohlkugeln haben einen Durchmesser von 10 µm bis 20 µm und verbessern die Stabilität des polymeren Hohlprofils. Geeignete Glaskugeln sind unter dem Namen "3M™ Glass Bubbles" käuflich erhältlich. Besonders bevorzugt enthält der polymere Grundkörper Polymere, Glasfasern und Glaskugeln. Eine Beimischung von Glaskugeln führt zu einer Verbesserung der thermischen Eigenschaften des Hohlprofils.

In einer alternativen bevorzugten Ausführungsform ist der polymere Grundkörper aus Holz oder Holz/ Polymer Gemischen gefertigt. Holz hat eine geringe Wärmeleitfähigkeit und ist als nachwachsender Rohstoff ökologisch besonders verträglich.

Der polymere Grundkörper weist bevorzugt entlang der Verglasungsinnenraumflächen eine Gesamtbreite von 10 mm bis 50 mm, besonders bevorzugt von 20 mm bis 36 mm, auf. Durch die Wahl der Breite der Verglasungsinnenraumflächen wird der Abstand zwischen erster und dritter Scheibe bzw. zwischen dritter und zweiter Scheibe bestimmt. Bevorzugt sind die Breiten der ersten Verglasungsinnenraumfläche und der zweiten Verglasungsinnenraumfläche gleich. Alternativ sind auch asymmetrische Abstandshalter möglich, bei denen die beiden Verglasungsinnenraumflächen unterschiedliche Breiten haben. Das genaue Abmaß der Verglasungsinnenraumflächen richtet sich nach den Dimensionen der Isolierverglasung und den gewünschten Scheibenzwischenraumgrößen.

Die Isolierverglasung ist mit einem Schutzgas, bevorzugt mit einem Edelgas, vorzugsweise Argon oder Krypton befüllt, die den Wärmeübergangswert im Isolierverglasungszwischenraum reduzieren.

An den Ecken der Isolierverglasung sind die Abstandshalter bevorzugt über Eckverbinder miteinander verknüpft. Derartige Eckverbinder können beispielsweise als Kunststoffformteil mit Dichtung ausgeführt sein, in dem zwei mit einem Gärungsschnitt versehene Abstandshalter zusammenstoßen. Grundsätzlich sind verschiedenste Geometrien der Isolierverglasung möglich, beispielsweise rechteckige, trapezförmige und abgerundete Formen. Zur Herstellung runder Geometrien kann der Abstandshalter beispielsweise im erwärmten Zustand gebogen werden.

In einer möglichen Ausführungsform der erfindungsgemäßen Isolierverglasung enthält der polymere Grundkörper mehr als eine Nut. Der Abstandshalter kann so mehr als eine mittlere Scheibe aufnehmen und zur Herstellung von Mehrfachisolierverglasungen mit mehr als drei Scheiben eingesetzt werden. In diesem Fall kann es sich bei der vierten und weiteren Scheiben, die in zusätzliche Nuten eingesetzt werden, um polymere Scheiben, Glasscheiben oder Verbundscheiben aus polymeren Scheiben und/oder Glasscheiben handeln. Weitere polymere Scheiben erhöhen dabei die Durchbruchhemmung der Verglasung.

Die Erfindung umfasst ferner ein Verfahren zur Herstellung einer erfindungsgemäßen Isolierverglasung umfassend die Schritte:
a) Erzeugung einer Verjüngung im umlaufenden Randbereich der thermoplastischen polymeren Scheibe der dritten Scheibe,
b) Einsetzen der dritten Scheibe im Bereich der Verjüngung der dritten Scheibe in die Nut des Abstandshalters,
c) Verbinden der ersten Scheibe mit der ersten Scheibenkontaktfläche des Abstandshalters über eine Dichtung und
   Verbinden der zweiten Scheibe mit der zweiten Scheibenkontaktfläche des Abstandshalters über eine Dichtung und
d) Verpressen der Scheibenanordnung.

Sofern es sich bei der dritten Scheibe um eine Verbundscheibe aus mehreren Einzelscheiben handelt, so wird diese vor oder nach Schritt a), in jedem Fall vor Schritt b), aus der mindestens einen thermoplastischen polymeren Scheibe und den weiteren Scheiben laminiert. Erfolgt die Lamination nach Schritt a), so ist die Verjüngung der thermoplastischen polymeren Scheibe so anzuordnen, dass diese nach Lamination an einer Außenfläche der dritten Scheibe angeordnet ist. Bevorzugt erfolgt die Lamination der thermoplastischen polymeren Scheibe mit weiteren Scheiben vor Schritt a). Dabei liegt die polymere thermoplastische Scheibe an einer Außenfläche der dritten Scheibe, so dass die Verjüngung nachfolgend in Schritt a) in die Oberfläche der polymeren Scheibe eingebracht werden kann.

In einer bevorzugten Ausführungsform des erfindungsgemäßen Verfahrens wird die Verjüngung in Schritt a) in die thermoplastische polymere Scheibe gefräst. Dies ist sowohl bei einer dritten Scheibe, die in Form einer einzelnen thermoplastischen polymeren Scheibe vorliegt, als auch bei einer Verbundscheibe als dritter Scheibe möglich.

In einer alternativen Ausführungsform des erfindungsgemäßen Verfahrens wird in Schritt a) die Verjüngung durch einen vollständigen Rückschnitt des Randbereichs der thermoplastischen polymeren Scheibe erzeugt. Die Kantenlänge der thermoplastischen polymeren Scheibe ist somit an allen vier Kanten geringer als die Kantenlänge einer weiteren Scheibe, mit der die thermoplastische polymere Scheibe laminiert wird. Die Verjüngung wird somit im Randbereich der thermoplastischen polymeren Scheibe erzeugt, während der über diese hinausragende Randbereich der weiteren Scheibe in die Nut des Abstandshalters eingesetzt wird. Dies ist im Hinblick auf eine Reduzierung der Prozessschritte vorteilhaft, da der Schritt des Ausfräsens, bzw. eine anderweitige Abtragung von Material, entfällt.

Die Tiefe der in Schritt a) eingebrachten Verjüngung ist dabei abhängig von der gewünschten Gesamtdicke der dritten Scheibe außerhalb der Verjüngung. Abhängig von der Breite der Nut des zu verwendenden Abstandshalters und der Scheibendicke ist eine entsprechend tiefe Verjüngung notwendig, wobei Scheibendicke im Randbereich der dritten Scheibe an die Breite der Nut angepasst wird. Dabei ist auch zu beachten ob die dritte Scheibe unter Verwendung einer Einlage eingesetzt werden soll.

Nach Erzeugen der Verjüngung in der dritten Scheibe gemäß Schritt a) wird gemäß Schritt b) die dritte Scheibe mit der Verjüngung in die Nut des Abstandshalters eingesetzt.

In einer bevorzugten Ausführungsform des Verfahrensschritts b) wird zunächst der Abstandshalter zu einem einseitig offenen Rechteck vorgeformt. Dabei können beispielsweise drei Abstandshalter mit einem Gärungsschnitt versehen und an den Ecken durch Eckverbinder verknüpft werden. Anstelle dessen können die Abstandshalter auch direkt miteinander verschweißt werden, beispielsweise mittels Ultraschallschweißen. In die U-förmig angeordneten Abstandshalter wird von der offenen Seite der Anordnung ausgehend die dritte Scheibe in die Nut des Abstandshalters eingeschoben. Die verbleibende offene Kante der dritten Scheibe wird daraufhin ebenfalls mit einem Abstandshalter geschlossen. Optional kann vor der Montage der Abstandshalter eine Einlage auf die Scheibenkanten aufgebracht oder in den Abstandshalter eingebracht werden.

Nach Einsetzen der dritten Scheibe in die Nut des Abstandshalters kann dieses vormontierte Bauteil auf einer klassischen dem Fachmann bekannten Doppelverglasungsanlage verarbeitet werden. Das ab Schritt a) erfolgende Verfahren ist dabei vollständig unabhängig davon welche Gesamtdicke und welche Zusammensetzung die dritte Scheibe aufweist. So können mittlere Scheiben unterschiedlicher Gesamtdicke auf der gleichen Fertigungsanlage unter Verwendung des gleichen Abstandshalters weiterverarbeitet werden. Gemäß dem erfindungsgemäßen Verfahren wird die Verjüngung in Schritt a) so erzeugt, dass bei gegebener Abstandshaltergeometrie die verbleibende Scheibendicke im Randbereich der dritten Scheibe, unabhängig von deren Dicke und Zusammensetzung, konstant ist. Die kostspielige Installation zusätzlicher Anlagenkomponenten kann somit vermieden werden.

Danach erfolgt die Verarbeitung des vormontierten Bauteils nach dem erfindungsgemäßen Verfahren, wobei im nächsten Schritt die erste Scheibe an der ersten Scheibenkontaktfläche angebracht wird und anschließend die zweite Scheibe an der zweiten Scheibenkontaktfläche angebracht wird. Diese Verklebung der Scheiben an den Scheibenkontaktflächen gemäß Schritt c) kann in einer beliebigen Reihenfolge durchgeführt werden. Optional kann die Verklebung beider Scheiben an den Scheibenkontaktflächen auch gleichzeitig erfolgen.

Bevorzugt werden die inneren Scheibenzwischenräume zwischen erster Scheibe und dritter Scheibe sowie zwischen zweiter Scheibe und dritter Scheibe vor dem Verpressen der Scheibenanordnung in Schritt d) mit einem Schutzgas gefüllt.

Bevorzugt wird im Anschluss an Schritt d) der äußere Scheibenzwischenraum zumindest teilweise, bevorzugt vollständig, mit einer äußeren Versiegelung verfüllt. Als äußere Isolierung wird beispielsweise eine plastische Abdichtmasse verwendet.

Die Erfindung umfasst des Weiteren die Verwendung der erfindungsgemäßen Isolierverglasung als durchbruchhemmende Verglasung, bevorzugt im Gebäudeinnenbereich, im Gebäudeaußenbereich und/oder in Fassaden.

Im Folgenden wird die Erfindung anhand von Zeichnungen näher erläutert. Die Zeichnungen sind rein schematische Darstellungen und nicht maßstabsgetreu. Sie schränken die Erfindung in keiner Weise ein. Es zeigen:
- Figur 1: einen Querschnitt einer Ausführungsform der erfindungsgemäßen Isolierverglasung mit einer einzelnen thermoplastischen polymeren Scheibe als dritter Scheibe und einer beidseitig angebrachten Verjüngung in der dritten Scheibe,
- Figur 2: einen Querschnitt einer weiteren Ausführungsform der erfindungsgemäßen Isolierverglasung mit einer einzelnen thermoplastischen polymeren Scheibe als dritter Scheibe und einer einseitig angebrachten Verjüngung in der dritten Scheibe,
- Figur 3: einen Querschnitt einer weiteren möglichen Ausführungsform der erfindungsgemäßen Isolierverglasung mit Verbundscheibe als dritter Scheibe umfassend zwei thermoplastische polymere Scheiben und einer beidseitig angebrachten Verjüngung in der dritten Scheibe,
- Figur 4: ein Flussdiagramm einer möglichen Ausführungsform des erfindungsgemäßen Verfahrens.

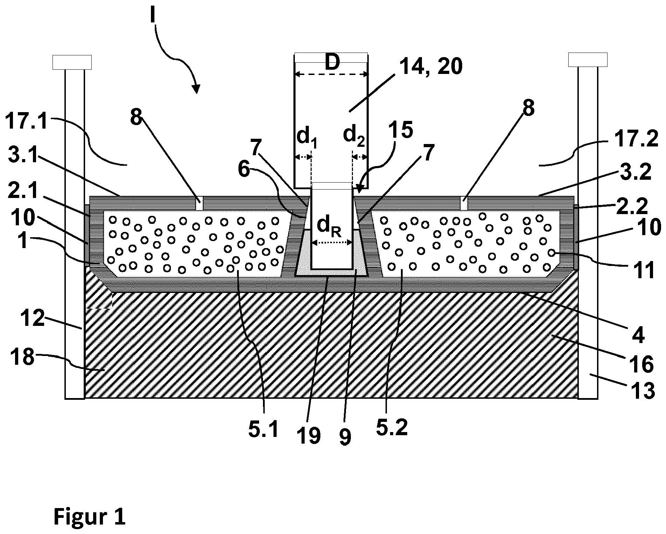

Figur 1 zeigt einen Querschnitt durch eine erfindungsgemäße Isolierverglasung I mit einer einzelnen thermoplastischen polymeren Scheibe 20 als dritter Scheibe 14 und einer beidseitig angebrachten Verjüngung 15 in der dritten Scheibe 14. Der Abstandshalter 1 umfasst einen polymeren Grundkörper 1 mit einer ersten Scheibenkontaktfläche 2.1, einer parallel dazu verlaufenden zweiten Scheibenkontaktfläche 2.2, einer ersten Verglasungsinnenraumfläche 3.1, einer zweiten Verglasungsinnenraumfläche 3.2 und einer Außenfläche 4. Der polymere Grundkörper des Abstandshalters 1 enthält Styrol-Acryl-Nitryl (SAN) mit etwa 35 Gew. % Glasfasern. Die gesamte Außenfläche 4 verläuft senkrecht zu den Scheibenkontaktflächen 2.1, 2.2 und verbindet die Scheibenkontaktflächen 2.1 und 2.2. Die den Scheibenkontaktflächen 2.1 und 2.2 nächstliegenden Abschnitte der Außenfläche 4 sind in einem Winkel von ungefähr 45° zur Außenfläche 4 in Richtung der Scheibenkontaktflächen 2.1 und 2.2 geneigt. Diese abgewinkelte Geometrie verbessert die Stabilität des polymeren Grundkörpers und ermöglicht, sofern gewünscht, eine bessere Verklebung des Abstandshalters 1 mit einer Barrierefolie (nicht gezeigt). Zwischen der Außenfläche 4 und der ersten Verglasungsinnenraumfläche 3.1 befindet sich eine erste Hohlkammer 5.1, während eine zweite Hohlkammer 5.2 zwischen der Außenfläche 4 und der zweiten Verglasungsinnenraumfläche 3.2 angeordnet ist. Zwischen den beiden Hohlkammern 5.1 und 5.2 befindet sich eine Nut 6, die parallel zu den Scheibenkontaktflächen 2.1 und 2.2 verläuft. Die Seitenflanken 7 der Nut 6 werden dabei von den Wänden der beiden Hohlkammern 5.1 und 5.2 gebildet. Die erste Scheibe 12 der Dreifachisolierverglasung ist über eine Dichtung 10 mit der ersten Scheibenkontaktfläche 2.1 des Abstandshalters 1 verbunden, während die zweite Scheibe 13 über eine Dichtung 10 mit der zweiten Scheibenkontaktfläche 2.2 verbunden ist. Der Zwischenraum zwischen erster Scheibe 12 und dritter Scheibe 14, begrenzt durch die erste Verglasungsinnenraumfläche 3.1, ist dabei als der erste innere Scheibenzwischenraum 17.1 definiert, und der Raum zwischen dritter Scheibe 14 und zweiter Scheibe 13, begrenzt durch die zweite Verglasungsinnenraumfläche 3.2, ist als der zweite innere Scheibenzwischenraum 17.2 definiert. Über die Öffnungen 8 in den Verglasungsinnenraumflächen 3.1 und 3.2 sind die inneren Scheibenzwischenräume 17.1 und 17.2 mit der jeweils darunter liegenden Hohlkammer 5.1 bzw. 5.2 verbunden. In den Hohlkammern 5.1 und 5.2 befindet sich ein Trockenmittel 11, das die Luftfeuchtigkeit aus den inneren Scheibenzwischenräumen 17.1 und 17.2 entzieht. In die Nut 6 des Abstandshalters ist die dritte Scheibe 14 über eine Einlage 9 eingesetzt. Die Einlage 9 umschließt die Kante der dritten Scheibe 14. Die Einlage 9 besteht aus Ethylen-Propylen-DienKautschuk. Die Einlage 9 fixiert die dritte Scheibe 14 spannungsfrei und kompensiert eine Wärmeausdehnung der Scheibe. Des Weiteren verhindert die Einlage 9 eine Geräuschentwicklung durch Verrutschen der dritten Scheibe 14. Die Tiefe der Nut 6 ist kleiner als die Höhe der Scheibenkontaktflächen 2.1, 2.2. Der äußere Scheibenzwischenraum 18, der durch die Außenfläche 4 und die erste Scheibe 12 und die zweite Scheibe 13 begrenzt wird, ist vollständig mit der äußeren Versiegelung 16 verfüllt. Die erste Scheibe 12 und die zweite Scheibe 13 Die thermoplastische polymere Scheibe 20 weist in ihrem umlaufenden Randbereich eine beidseitige Verjüngung 15 auf. Im Bereich dieser Verjüngung 15 ist die Scheibe 20 in die Nut 6 eingesetzt. Die beidseitige Verjüngung der polymeren Scheibe 20 besteht in jeweils einer Ausfräsung auf beiden Oberflächen der Scheibe. Die Gesamtdicke D der dritten Scheibe 14 ergibt sich in diesem Fall aus der Dicke der polymeren Scheibe außerhalb der Verjüngung 15. Im Bereich der Verjüngung 15 entspricht die Dicke der polymeren Scheibe 20 der Gesamtdicke D abzüglich der Tiefe (d₁ und d₂) der beiden Verjüngungen, woraus sich die Scheibendicke d_{R} im Randbereich der dritten Scheibe ergibt. Die Gesamtdicke der dritten Scheibe beträgt D = 8 mm, die Tiefe der Verjüngungen beträgt d₁ = d₂ = 2,5 mm, woraus sich die Scheibendicke im Randbereich als d_{R} = D - d₁ - d₂ = 3 mm ergibt. Die äußere Versiegelung 16 wird von einem organischen Polysulfid gebildet. Die erste Scheibe 12 und die zweite Scheibe 13 bestehen aus Kalk-Natron-Glas mit einer Dicke von 3 mm. Die Dichtung 10 besteht aus Butylkautschuk. Der Abstandshalter 1 hat eine Höhe von 6,5 mm und eine Gesamtbreite von 34 mm. Die Nut 6 besitzt eine Tiefe von 5 mm, während die erste Verglasungsinnenraumfläche 3.1 16 mm und die zweite Verglasungsinnenraumfläche 3.2 16 mm breit ist. Die Seitenflanken 7 der Nut 6 sind in Richtung der dritten Scheibe 14 geneigt, so dass die Nut 6 an ihrer Bodenfläche 19 eine größere Breite hat als an ihrer, der Bodenfläche gegenüberliegenden, offenen Seite. Die maximale Breite der Nut 6 beträgt 4,5 mm, gemessen an ihrer Bodenfläche 19. Die minimale Breite der Nut 6, gemessen an ihrer offenen Seite, beträgt 3,2 mm. An der offenen Seite der Nut 6 berühren die Seitenflanken 7 die mittlere Scheibe 14 und halten diese in Position. Die Einlage 9 befindet sich zwischen umlaufender Scheibenkante und Bodenfläche 19 der Nut 6, so dass die mittlere Scheibe 14 die Bodenfläche 19 der Nut 6 nicht berührt. Die mittlere Scheibe 14 kann somit bei Erwärmung eine Längenausdehnung erfahren, ohne dass Spannungen in der Scheibe auftreten. Da die Einlage 9 flexibel ist, wird sie dabei zusammengedrückt und kann die Ausdehnung der dritten Scheibe 14 kompensieren.

Diese erfindungsgemäße Ausführungsform zeigt eine in vorteilhafter Weise erhöhte Durchbruchhemmung im Vergleich zu einer nach dem Stand der Technik bekannten Dreifachisolierverglasung. Die erfindungsgemäße Isolierverglasung gemäß Figur 1 erreicht dabei überraschenderweise die Schutzklasse P6B. Ferner ist die erfindungsgemäße Ausführungsform der Isolierverglasung vorteilhaft im Hinblick auf eine einfache Prozessführung im Herstellungsprozess, die unabhängig von der Gesamtdicke der dritten Scheibe keine Anpassungen der Produktionsanlage oder des Prozesses erfordert. Die Dicke der dritten Scheibe kann variabel gestaltet werden, wobei die Geometrie des Abstandshalters unverändert gelassen werden kann. Da die dritte Scheibe im Bereich der Verjüngung in die Nut des Abstandshalters eingesetzt wird, ist die Breite der Nut unabhängig von der Dicke der dritten Scheibe außerhalb der Verjüngung.

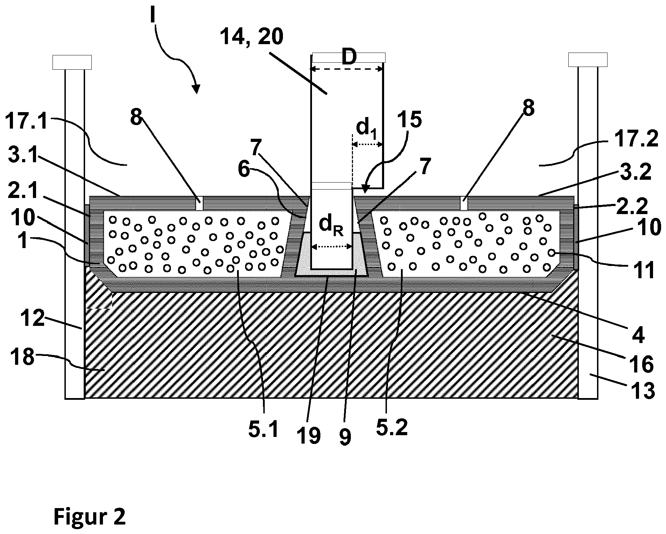

Figur 2 zeigt einen Querschnitt einer weiteren Ausführungsform der erfindungsgemäßen Isolierverglasung mit einer einzelnen thermoplastischen polymeren Scheibe 20 als dritter Scheibe 14 und einer einseitig angebrachten Verjüngung 15 in der dritten Scheibe 14. Der grundsätzliche Aufbau entspricht dem in Figur 1 beschriebenen. Im Unterschied dazu verfügt die thermoplastische polymere Scheibe 20 nur über eine einseitige Verjüngung. Die Gesamtdicke der dritten Scheibe 14 beträgt D = 8 mm, die Tiefe der Verjüngung beträgt d₁ = 5 mm, woraus sich die Scheibendicke im Randbereich als d_{R} = D - d₁ = 3 mm ergibt. Die erste Scheibe 12 und die zweite Scheibe 13 bestehen aus Kalk-Natron-Glas mit einer Dicke von 4 mm. Die Verjüngung kann sowohl in Richtung der Angriffsseite der Verglasung, als auch in Richtung der Schutzseite ausgerichtet sein.

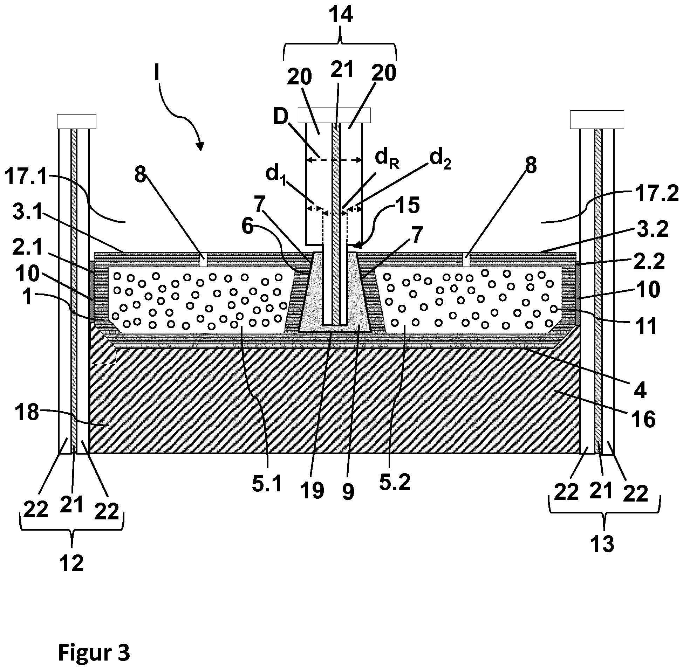

Figur 3 zeigt einen Querschnitt einer weiteren möglichen Ausführungsform der erfindungsgemäßen Isolierverglasung I mit einer Verbundscheibe als dritter Scheibe 14 umfassend zwei thermoplastische polymere Scheiben 20 und einer beidseitig angebrachten Verjüngung in der dritten Scheibe 14. Der grundsätzliche Aufbau entspricht dem in Figur 1 beschriebenen. Im Unterschied dazu sind die erste Scheibe 12, die zweite Scheibe 13 und die dritte Scheibe 14 jeweils als Verbundscheibe ausgeführt. Die erste Scheibe 12 und die zweite Scheibe 13 bestehen jeweils aus zwei Glasscheiben 22 aus Kalk-Natron-Glas in einer Dicke von jeweils 3 mm, die über eine Laminierfolie 21 aus Polyvinylbutyral in einer Dicke von 0,76 mm verbunden sind. Die dritte Scheibe besteht aus zwei thermoplastischen polymeren Scheiben 20 mit einer Dicke von jeweils 6 mm, die über eine Laminierfolie 21 aus thermoplastischem Polyurethan in einer Dicke von 1,25 mm miteinander verklebt sind, wobei sich die Gesamtdicke der dritten Scheibe 14 aus der Summe dieser Komponenten ergibt: D = 2 x 6 mm + 1,25 mm = 13,25 mm. Im Randbereich der dritten Scheibe 14 ist in jede der polymeren Scheiben 20 eine Verjüngung 15 mit einer Tiefe von d₁ = d₂ = 5 mm eingebracht. Im Randbereich ergibt sich die Dicke der Scheibe 14 unter Berücksichtigung der Dicke der Laminierfolie als d_{R} = D - d₁ - d₂ = 13,25 mm - 2 x 5,1 mm = 3,05 mm.

Die Ausführungsform gemäß Figur 3 weist eine weitere Verbesserung der Durchbruchhemmung auf, die durch die Verwendung von Verbundscheiben, insbesondere einer Verbundscheibe als dritter Scheibe, erzielt wird. Die gezeigte Anordnung erreicht dabei die Schutzklasse P8B.

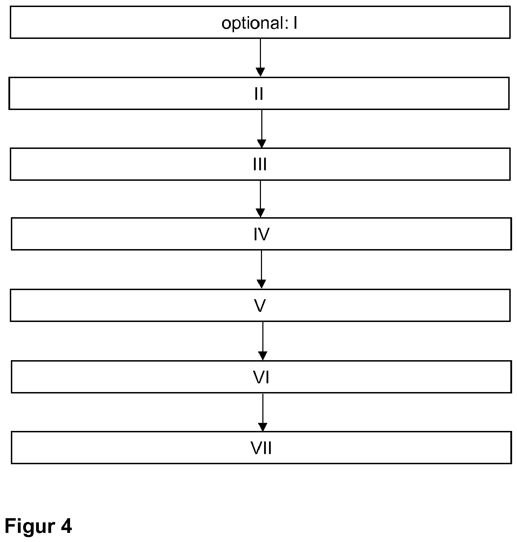

Figur 4 zeigt ein Flussdiagramm einer möglichen Ausführungsform des erfindungsgemäßen Verfahrens zur Herstellung einer Isolierverglasung umfassend die Schritte:
I optional: die erste Scheibe 12, die zweite Scheibe 13 und/oder die dritte Scheibe 14 als Verbundscheibe aus mindestens zwei Glasscheiben 22 und/oder thermoplastischen polymeren Scheiben 20 und mindestens einer Laminierfolie 21 laminiert werden, wobei die dritte Scheibe 14 mindestens eine thermoplastische polymere Scheibe 20 an der Oberfläche der dritten Scheibe 14 umfasst
II eine einseitige oder beidseitige Verjüngung 15 in den umlaufenden Randbereich der thermoplastischen polymeren Scheibe 20 der dritten Scheibe 14 gefräst wird
III die dritte Scheibe 14 mit der Verjüngung 15 in die Nut 6 eines Abstandshalters 1 eingesetzt wird
IV die erste Scheibe 12 mit der ersten Scheibenkontaktfläche 2.1 des Abstandshalters 1 über eine Dichtung 10 verbunden wird
V die zweite Scheibe 13 mit der zweiten Scheibenkontaktfläche 2.2 des Abstandshalters 1 über eine Dichtung 10 verbunden wird
VI die Scheibenanordnung aus den Scheiben 12, 13, 14 und dem Abstandshalter 1 miteinander verpresst wird
VII der äußere Scheibenzwischenraum 18 mit einer äußeren Versiegelung 16 vollständig verfüllt wird

### Bezugszeichenliste

- I: Isolierverglasung
- 1: Abstandshalter
- 2: Scheibenkontaktflächen
- 2.1: erste Scheibenkontaktfläche
- 2.2: zweite Scheibenkontaktfläche
- 3: Verglasungsinnenraumflächen
- 3.1: erste Verglasungsinnenraumfläche
- 3.2: zweite Verglasungsinnenraumfläche
- 4: Außenfläche
- 5: Hohlkammern
- 5.1: erste Hohlkammer
- 5.2: zweite Hohlkammer
- 6: Nut
- 7: Seitenflanken der Nut
- 8: Öffnungen
- 9: Einlage
- 10: Dichtung
- 11: Trockenmittel
- 12: erste Scheibe
- 13: zweite Scheibe
- 14: dritte Scheibe
- 15: Verjüngung der dritten Scheibe
- 16: äußere Versiegelung
- 17: innerer Scheibenzwischenraum
- 17.1: erster innerer Scheibenzwischenraum
- 17.2: zweiter innerer Scheibenzwischenraum
- 18: äußerer Scheibenzwischenraum
- 19: Bodenfläche der Nut
- 20: thermoplastische polymere Scheibe
- 21: Laminierfolie
- 22: Glasscheibe
- D: Gesamtdicke der dritten Scheibe 14 (außerhalb der Verjüngung 15)
- d₁: Tiefe einer ersten Verjüngung 15
- d₂: Tiefe einer zweiten Verjüngung 15
- d_{R}: Dicke der dritten Scheibe 14 im Randbereich der Scheibe 14 mit Verjüngung 15

## Patentansprüche

1. Isolierverglasung (I), mindestens umfassend eine erste Scheibe (12), eine zweite Scheibe (13) und eine dritte Scheibe (14) und einen umlaufenden Abstandshalter (1), wobei
- der Abstandshalter (1) von einem polymeren Grundkörper mindestens umfassend eine erste Scheibenkontaktfläche (2.1) und eine parallel dazu verlaufende zweite Scheibenkontaktfläche (2.2), eine erste Verglasungsinnenraumfläche (3.1), eine zweite Verglasungsinnenraumfläche (3.2), eine Außenfläche (4), eine erste Hohlkammer (5.1) und eine zweite Hohlkammer (5.2) gebildet wird,
- der Abstandshalter (1) eine Nut (6) zur Aufnahme der dritten Scheibe (14) aufweist, die parallel zur ersten Scheibenkontaktfläche (2.1) und zweiten Scheibenkontaktfläche (2.2) zwischen der ersten Verglasungsinnenraumfläche (3.1) und der zweiten Verglasungsinnenraumfläche (3.2) verläuft,
- die erste Hohlkammer (5.1) an die erste Verglasungsinnenraumfläche (3.1) angrenzt, und die zweite Hohlkammer (5.2) an die zweite Verglasungsinnenraumfläche (3.2) angrenzt,
- die Seitenflanken (7) der Nut (6) von den Wänden der ersten Hohlkammer (5.1) und der zweiten Hohlkammer (5.2) gebildet werden,
- die erste Scheibe (12) über eine Dichtung (10) mit der ersten Scheibenkontaktfläche (2.1) verbunden ist,
- die zweite Scheibe (13) über eine Dichtung (10) an der zweiten Scheibenkontaktfläche (2.2) verbunden ist,
**dadurch gekennzeichnet, dass** die dritte Scheibe (14) von mindestens einer thermoplastischen polymeren Scheibe (20) mit einer Dicke von mindestens 3 mm gebildet wird,
- die thermoplastische polymere Scheibe (20) mindestens eine Verjüngung (15) im Randbereich der dritten Scheibe (14) aufweist und
- die dritte Scheibe (14) im Bereich der Verjüngung (15) in die Nut (6) des Abstandshalters (I) eingesetzt ist.

2. Isolierverglasung (I) nach Anspruch 1, wobei die dritte Scheibe (14) aus einer thermoplastischen polymeren Scheibe (20) besteht.

3. Isolierverglasung (I) nach Anspruch 1, wobei die dritte Scheibe (14) aus mehreren Scheiben besteht und mindestens eine thermoplastische polymere Scheibe (20) umfasst.

4. Isolierverglasung (I) nach Anspruch 3, wobei die Scheiben über Laminierfolien (21) zur dritten Scheibe (14) verbunden sind.

5. Isolierverglasung (I) nach einem der Ansprüche 1 bis 4, wobei im Bereich der Verjüngung (15) der thermoplastischen polymeren Scheibe (20) ein Rückschnitt des polymeren Materials besteht.

6. Isolierverglasung (I) nach einem der Ansprüche 1 bis 5, wobei die umlaufende Kante der dritten Scheibe (14) die Bodenfläche (19) der Nut (6) nicht unmittelbar kontaktiert.

7. Isolierverglasung (I) nach einem der Ansprüche 1 bis 6, wobei mindestens eine Einlage (9) in der Nut (6) angebracht ist und die Einlage (9) bevorzugt ein Elastomer, besonders bevorzugt Butylkautschuk, enthält.

8. Isolierverglasung (I) nach einem der Ansprüche 1 bis 7, wobei die Hohlkammern (5.1, 5.2) des Abstandshalters (1) ein Trockenmittel (11) enthalten.

9. Isolierverglasung (I) nach einem der Ansprüche 1 bis 8, wobei die erste Scheibe (12) und/oder die zweite Scheibe (13) eine Verbundscheibe, bevorzugt eine Verbundscheibe aus mindestens einer Glasscheibe und mindestens einer weiteren Scheibe, besonders bevorzugt eine Verbundscheibe aus mindestens zwei Glasscheiben, umfassen.

10. Isolierverglasung (I) nach einem der Ansprüche 1 bis 9, wobei ein äußerer Scheibenzwischenraum (18) an die erste Scheibe (12), die zweite Scheibe (13) und die Außenfläche (4) des Abstandshalters (1) angrenzt und dieser zumindest teilweise mit einer äußeren Versiegelung (16) verfüllt ist.

11. Isolierverglasung (I) nach einem der Ansprüche 1 bis 10, wobei eine gas- und dampfdichte Barriere mindestens auf der Außenfläche (4) des Abstandshalters (1) angebracht ist und die gas- und dampfdichte Barriere als Barrierefolie ausgeführt ist, die mindestens eine polymere Schicht sowie eine metallische Schicht oder eine keramische Schicht, bevorzugt mindestens zwei metallische Schichten und/oder keramische Schichten, die alternierend mit mindestens einer polymeren Schicht angeordnet sind, umfasst.

12. Isolierverglasung (I) nach einem der Ansprüche 1 bis 11, wobei der polymere Grundkörper des Abstandshalters (1) Polyethylen (PE), Polycarbonate (PC), Polypropylen (PP), Polystyrol, Polybutadien, Polynitrile, Polyester, Polyurethane, Polymethylmetacrylate, Polyacrylate, Polyamide, Polyethylenterephthalat (PET), Polybutylenterephthalat (PBT), bevorzugt Acrylnitril-Butadien-Styrol (ABS), Acrylester-Styrol-Acrylnitril (ASA), Acrylnitril-Butadien-Styrol/Polycarbonat (ABS/PC), Styrol-Acrylnitril (SAN), PET/PC, PBT/PC und/oder Copolymere oder Gemische davon enthält.

13. Verfahren zur Herstellung einer Isolierverglasung (I) nach einem der Ansprüche 1 bis 12, wobei zumindest
a) eine Verjüngung (15) im umlaufenden Randbereich der thermoplastischen polymeren Scheibe (20) der dritten Scheibe (14) erzeugt wird,
b) die dritte Scheibe (14) mit der Verjüngung (15) in die Nut (6) des Abstandshalters (1) eingesetzt wird,
c) die erste Scheibe (12) mit der ersten Scheibenkontaktfläche (2.1) des Abstandshalters (1) über eine Dichtung (10) verbunden wird und die zweite Scheibe (13) mit der zweiten Scheibenkontaktfläche (2.2) des Abstandshalters (1) über eine Dichtung (10) verbunden wird und
d) die Scheibenanordnung aus den Scheiben (12, 13, 14) und dem Abstandshalter (1) miteinander verpresst wird.

14. Verfahren nach Anspruch 13, wobei die Verjüngung (15) in Schritt a) in die thermoplastische polymere Scheibe (20) gefräst wird.

15. Verwendung der Isolierverglasung nach einem der Ansprüche 1 bis 12 als durchbruchhemmende Verglasung, bevorzugt im Gebäudeinnenbereich, im Gebäudeaußenbereich und/oder in Fassaden.

## Claims

1. Insulating glazing (I), at least comprising a first pane (12), a second pane (13), and a third pane (14) and a circumferential spacer (1), wherein
- - the spacer (1) is formed by a polymeric main body at least comprising a first pane contact surface (2.1) and, extending parallel thereto, a second pane contact surface (2.2), a first glazing interior surface (3.1), a second glazing interior surface (3.2), an outer surface (4), a first hollow chamber (5.1), and a second hollow chamber (5.2),
- the spacer (1) has a groove (6) for receiving third pane (14), which groove extends parallel to the first pane contact surface (2.1) and the second pane contact surface (2.2) between the first glazing interior surface (3.1) and the second glazing interior surface (3.2),
- the first hollow chamber (5.1) is adjacent the first glazing interior surface (3.1), and the second hollow chamber (5.2) is adjacent the second glazing interior surface (3.2),
- the lateral flanks (7) of the groove (6) are formed by the walls of the first hollow chamber (5.1) and the second hollow chamber (5.2),
- the first pane (12) is connected to the first pane contact surface (2.1) via a seal (10),
- the second pane (13) is connected (10) to the second pane contact surface (2.2) via a seal (10),
**characterized in that** the third pane (14) is formed by at least one thermoplastic polymeric pane (20) with a thickness of at least 3 mm,
- the thermoplastic polymeric pane (20) has at least one taper (15) in the edge region of the third pane (14), and
- the third pane (14) is inserted into the groove (6) of the spacer (I) in the region of the taper (15).

2. Insulating glazing (I) according to claim 1, wherein the third pane (14) consists of a thermoplastic polymeric pane (20).

3. Insulating glazing (I) according to claim 1, wherein the third pane (14) consists of a plurality of panes and includes at least one thermoplastic polymeric pane (20).

4. Insulating glazing (I) according to claim 3, wherein the panes are joined via laminating films (21) to form the third pane (14).

5. Insulating glazing (I) according to one of claims 1 through 4, wherein there is a cutback of the polymeric material in the region of the taper (15) of the thermoplastic polymeric pane (20).

6. Insulating glazing (I) according to one of claims 1 through 5, wherein the circumferential edge of the third pane (14) does not directly contact the bottom surface (19) of the groove (6).

7. Insulating glazing (I) according to one of claims 1 through 6, wherein at least one insert (9) is placed in the groove (6) and the insert (9) preferably contains an elastomer, particularly preferably butyl rubber.

8. Insulating glazing (I) according to one of claims 1 through 7, wherein the hollow chambers (5.1, 5.2) of the spacer (1) contain a desiccant (11).

9. Insulating glazing (I) according to one of claims 1 through 8, wherein the first pane (12) and/or the second pane (13) comprises a composite pane, preferably a composite pane made of at least one glass pane and at least one further pane, particularly preferably a composite pane made of at least two glass panes.

10. Insulating glazing (I) according to one of claims 1 through 9, wherein an outer interpane space (18) is adjacent the first pane (12), the second pane (13), and the outer surface (4) of the spacer (1) and this outer interpane space is at least partially filled with an outer seal (16).

11. Insulating glazing (I) according to one of claims 1 through 10, wherein a gas- and vapor-tight barrier is attached at least on the outer surface (4) of the spacer (1) and the gas- and vapor-tight barrier is implemented as a barrier film, comprising at least one polymeric layer as well as a metallic layer or a ceramic layer, preferably at least two metallic layers and/or ceramic layers, arranged alternatingly with at least one polymeric layer.

12. Insulating glazing (I) according to one of claims 1 through 11, wherein the polymeric main body of the spacer (1) contains polyethylene (PE), polycarbonates (PC), polypropylene (PP), polystyrene, polybutadiene, polynitriles, polyesters, polyurethanes, polymethyl methacrylates, polyacrylates, polyamides, polyethylene terephthalate (PET), polybutylene terephthalate (PBT), preferably acrylonitrile butadiene styrene (ABS), acrylonitrile styrene acrylester (ASA), acrylonitrile butadiene styrene/polycarbonate (ABS/PC), styrene acrylonitrile (SAN), PET/PC, PBT/PC, and/or copolymers or mixtures thereof.

13. Method for producing an insulating glazing (I) according to one of claims 1 through 12, wherein at least
a) a taper (15) is produced in the circumferential edge region of the thermoplastic polymeric pane (20) of the third pane (14),
b) the third pane (14) with the taper (15) is inserted into the groove (6) of the spacer (1),
c) the first pane (12) is bonded to the first pane contact surface (2.1) of the spacer (1) via a seal (10), and
the second pane (13) is bonded to the second pane contact surface (2.2) of the spacer (1) via a seal (10), and
d) the pane assembly consisting of the panes (12, 13, 14) and the spacer (1) is pressed together.

14. Method according to claim 13, wherein in step a), the taper (15) is milled into the thermoplastic polymeric pane (20).

15. Use of the insulating glazing according to one of claims 1 through 12 as a breakthrough-resistant glazing, preferably in the building interior, in the building exterior, and/or in façades.

## Revendications

1. Vitrage isolant (I), comportant au moins une première plaque (12), une deuxième plaque (13) et une troisième plaque (14) et un espaceur périphérique (1), dans lequel
- l'espaceur (1) est formé d'un corps de base polymère comportant au moins une première surface de contact de plaque (2.1) et une seconde surface de contact de plaque (2.2) s'étendant parallèlement à celle-ci, une première surface d'espace interne de vitrage (3.1), une seconde surface d'espace interne de vitrage (3.2), une surface externe (4), une première chambre creuse (5.1) et une seconde chambre creuse (5.2) ;
- l'espaceur (1) présente une rainure (6) pour la réception de la troisième plaque (14), qui s'étend entre la première surface d'espace interne de vitrage (3.1) et la seconde surface d'espace interne de vitrage (3.2) parallèlement à la première surface de contact de plaque (2.1) et la seconde surface de contact de plaque (2.2) ;
- la première chambre creuse (5.1) est adjacente à la première surface d'espace interne de vitrage (3.1), et la seconde chambre creuse (5.2) est adjacente à la seconde surface d'espace interne de vitrage (3.2) ;
- les flancs latéraux (7) de la rainure (6) sont formés par les parois de la première chambre creuse (5.1) et de la seconde chambre creuse (5.2) ;
- la première plaque (12) est reliée à la première surface de contact de plaque (2.1) par l'intermédiaire d'un joint d'étanchéité (10) ;
- la deuxième plaque (13) est reliée à la seconde surface de contact de plaque (2.2) par l'intermédiaire d'un joint d'étanchéité (10) ;
**caractérisé par le fait que**
- la troisième plaque (14) est formée d'au moins une plaque polymère thermoplastique (20) ayant une épaisseur d'au moins 3 mm ;
- la plaque polymère thermoplastique (20) présente au moins un rétrécissement (15) dans la région de bordure de la troisième plaque (14) ; et
- la troisième plaque (14) est installée dans la rainure (6) de l'espaceur (I) dans la région du rétrécissement (15) .

2. Vitrage isolant (I) selon la revendication 1, dans lequel la troisième plaque (14) consiste en une plaque polymère thermoplastique (20).

3. Vitrage isolant (I) selon la revendication 1, dans lequel la troisième plaque (14) consiste en plusieurs plaques et comporte au moins une plaque polymère thermoplastique (20).

4. Vitrage isolant (I) selon la revendication 3, dans lequel les plaques sont reliées pour donner la troisième plaque (14) par l'intermédiaire de films laminés (21).

5. Vitrage isolant (I) selon l'une des revendications 1 à 4, dans lequel il y a une contre-découpe de la matière polymère dans la région du rétrécissement (15) de la plaque polymère thermoplastique (20).

6. Vitrage isolant (I) selon l'une des revendications 1 à 5, dans lequel les bords périphériques de la troisième plaque (14) ne sont pas directement en contact avec la surface de fond (19) de la rainure (6).

7. Vitrage isolant (I) selon l'une des revendications 1 à 6, dans lequel au moins une garniture (9) est mise en place dans la rainure (6) et la garniture (9) contient de préférence en élastomère, de façon particulièrement préférée, du caoutchouc butyle.

8. Vitrage isolant (I) selon l'une des revendications 1 à 7, dans lequel les chambres creuses (5.1, 5.2) de l'espaceur (1) contiennent un agent dessicatif (11).

9. Vitrage isolant (I) selon l'une des revendications 1 à 8, dans lequel la première plaque (12) et/ou la deuxième plaque (13) comporte(nt) une plaque feuilletée, de préférence une plaque feuilletée faite d'au moins une plaque de verre et d'au moins une autre plaque, de façon particulièrement préférée, une plaque feuilletée faite d'au moins deux plaques de verre.

10. Vitrage isolant (I) selon l'une des revendications 1 à 9, dans lequel un espace externe entre plaques (18) est adjacent à la première plaque (12), à la deuxième plaque (13) et à la surface externe (4) de l'espaceur (1) et celui-ci est rempli au moins partiellement par un scellement externe (16).

11. Vitrage isolant (I) selon l'une des revendications 1 à 10, dans lequel une barrière d'étanchéité aux gaz et aux vapeurs est appliquée au moins sur la surface externe (4) de l'espaceur (1) et la barrière étanche aux gaz et aux vapeurs est réalisée en tant que film barrière, qui comporte au moins une couche polymère ainsi qu'une couche métallique ou une couche céramique, de préférence au moins deux couches métalliques et/ou couches céramiques, qui sont disposées en alternance avec au moins une couche polymère.

12. Vitrage isolant (I) selon l'une des revendications 1 à 11, dans lequel le corps de base polymère de l'espaceur (1) contient du polyéthylène (PE), des polycarbonates (PC), du polypropylène (PP), du polystyrène, du polybutadiène, des polynitriles, des polyesters, des polyuréthanes, des poly(méthacrylates de méthyle), des polyacrylates, des polyamides, du poly(téréphtalate d'éthylène) (PET), du poly(téréphtalate de butylène) (PBT), de préférence de l'acrylonitrile-butadiène-styrène (ABS), de l'ester acrylique-styrène-acrylonitrile (ASA), de l'acrylonitrile-butadiène-styrène/polycarbonate (ABS/PC), du styrène-acrylonitrile (SAN), du PET/PC, du PBT/PC et/ou des copolymères ou des mélanges de ceux-ci.

13. Procédé de fabrication d'un vitrage isolant (I) selon l'une des revendications 1 à 12, dans lequel au moins
a) un rétrécissement (15) est créé dans la région de bordure périphérique de la plaque polymère thermoplastique (1) de la troisième plaque (14) ;
b) la troisième plaque (14) est introduite par le rétrécissement (15) dans la rainure (6) de l'espaceur (1) ;
c) la première plaque (12) est reliée par l'intermédiaire d'un joint d'étanchéité (10) à la première surface de contact de plaque (2.1) de l'espaceur (1) et la deuxième plaque (13) est reliée par l'intermédiaire d'un joint d'étanchéité (10) à la seconde surface de contact de plaque (2.2) de l'espaceur (1) ; et
d) l'assemblage de plaques fait des plaques (12, 13, 14) et de l'espaceur (1) est compressé conjointement.

14. Procédé selon la revendication 13, dans lequel le rétrécissement (15) à l'étape a) est fraisé dans la plaque polymère thermoplastique (20).

15. Utilisation du vitrage isolant selon l'une des revendications 1 à 12 en tant que vitrage anti-rupture, de préférence dans la région intérieure de bâtiments, dans la région extérieure de bâtiments et/ou dans des façades.
